(19) Europäisches Patentamt / European Patent Office / Office européen des brevets

(11) **EP 3 805 238 B1**

(12) **EUROPEAN PATENT SPECIFICATION**

(45) Date of publication and mention of the grant of the patent:
**03.07.2024 Bulletin 2024/27**

(21) Application number: **19811354.0**

(22) Date of filing: **31.05.2019**

(51) International Patent Classification (IPC):
*C07F 7/00* (2006.01)   *B01J 31/16* (2006.01)
*B01J 20/22* (2006.01)   *B01D 53/02* (2006.01)
*B01J 31/22* (2006.01)   *B01D 53/28* (2006.01)

(52) Cooperative Patent Classification (CPC):
**C07F 7/00; B01J 20/226; B01J 31/1691; B01J 31/2239;** B01D 53/02; B01D 53/28; B01D 2253/204; B01D 2257/708; B01J 31/16; B01J 2231/643; B01J 2531/0211; B01J 2531/0216; B01J 2531/48

(86) International application number:
**PCT/KR2019/006620**

(87) International publication number:
**WO 2019/231297 (05.12.2019 Gazette 2019/49)**

(54) **NOVEL METAL-ORGANIC FRAMEWORK HAVING POROUS STRUCTURE FORMED FROM ZIRCONIUM CLUSTER SECONDARY BUILDING UNIT AND MULTI-BINDING LINKER**

NEUARTIGES METALLORGANISCHES GERÜST MIT PORÖSER STRUKTUR, GEBILDET AUS EINER ZIRKONIUM-CLUSTER-SEKUNDÄRAUFBAUEINHEIT UND MULTIBINDENDEM LINKER

NOUVELLE STRUCTURE ORGANOMÉTALLIQUE AYANT UNE STRUCTURE POREUSE FORMÉE À PARTIR D'UNE UNITÉ DE CONSTRUCTION SECONDAIRE EN GRAPPE DE ZIRCONIUM ET D'UN LIEUR À LIAISONS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2018 KR 20180062975**

(43) Date of publication of application:
**14.04.2021 Bulletin 2021/15**

(73) Proprietor: **Korea Research Institute of Chemical Technology**
**Daejeon 34114 (KR)**

(72) Inventors:
• **CHANG, Jong-San**
  **Daejeon 34875 (KR)**
• **SERRE, Christian**
  **75005 Paris (FR)**
• **CHO, Kyung Ho**
  **Anseong-si, Gyeonggi-do 17603 (KR)**
• **LEE, Ji Sun**
  **Busan 47179 (KR)**
• **HWANG, Young Kyu**
  **Daejeon 34118 (KR)**
• **MAURIN, Guillaume**
  **34095 Montpellier cedex (FR)**
• **WANG, Sujing**
  **75014 Paris (FR)**

(74) Representative: **Michalski Hüttermann & Partner Patentanwälte mbB**
**Kaistraße 16A**
**40221 Düsseldorf (DE)**

(56) References cited:
**WO-A1-2015/127033      KR-A- 20160 134 644**
**US-A1- 2017 226 040**

- WANG HAO ET AL: "Topologically guided tuning of Zr-MOF pore structures for highly selective separation of C6 alkane isomers", NATURE COMMUNICATIONS, vol. 9, no. 1, 1 May 2018 (2018-05-01), XP055888225, DOI: 10.1038/s41467-018-04152-5 Retrieved from the Internet: URL:https://www.nature.com/articles/s41467-018-04152-5.pdf>
- WANG SUJING ET AL: "A robust large-pore zirconium carboxylate metal-organic framework for energy-efficient water-sorption-driven refrigeration", NATURE ENERGY, NATURE PUBLISHING GROUP UK, LONDON, vol. 3, no. 11, 22 October 2018 (2018-10-22), pages 985-993, XP036629371, DOI: 10.1038/S41560-018-0261-6

- YUAN, S.: "Stable Metal-Organic Frameworks with Group 4 Metals: Current Status and Trends", ACS Cent. Sci., vol. 4, no. 4, 26 March 2018 (2018-03-26), pages 440-450, XP055612628,
- HE, Y.: "Multifunctional metal-organic frameworks constructed from meta-benzenedicarboxylate units", Chem. Soc. Rev., vol. 43, no. 16, 2014, pages 5618-5656, XP055659441,
- BAI, Y.: "Zr-based metal-organic frameworks: design, synthesis, structure and applications", Chem. Soc. Rev., vol. 45, 2016, pages 2327-2367, XP055446790, DOI: 10.1039/C5CS00837A

**Description**

**[Technical Field]**

The present invention relates to a novel metal-organic framework having a porous structure including Zre cluster secondary building units and/or $Zr_{12}$ cluster secondary building units and multitopic linkers capable of forming double or quadruple bonds therewith, a manufacturing method thereof, and uses thereof as an adsorbent and a catalyst.

**[Background Art]**

Organic-inorganic hybrid nanoporous materials, so-called "metal-organic frameworks (MOFs)", are generally referred to as "porous coordination polymers" or "porous organic-inorganic hybrid materials". Metal-organic frameworks have recently been developed by integrating molecular coordinate bonding and material science, and more than 800,000 crystal structures have been reported to date. Metal-organic frameworks may have various pore structures, pore sizes, and pore volumes depending on the type, and may have chemical properties depending on functionalization of a metal site or an organic ligand of the metal-organic framework according to structural characteristics thereof. Metal-organic frameworks may be applied to adsorbents for gas or liquid separation, substances for gas storage, sensors, membranes, functional thin films, drug delivery substances, filter substances, catalysts, catalyst supports, and the like due to these physical and chemical properties. However, despite the various advantages of metal-organic frameworks described above, application thereof is extremely limited since crystal structures of most metal-organic frameworks may collapse when exposed to various processing conditions due to poor mechanical stability, thermal stability, chemical stability, and/or stability in water. MOFs are inter alia known from Wang Hao et al, Nature Communications, Vol, 9. No. 1 (2018) and Wang Sujing et al, Nature Energy, Vol. 3 No. 11, (2018).

Among various metal-organic frameworks, zirconium-based metal-organic frameworks are known to have relatively high mechanical stability, hydrothermal stability, and/or chemical stability compared to metal-organic frameworks formed of a divalent or trivalent metal since zirconium clusters form coordinate bonds with carboxylates of organic ligands via strong bonds with oxygen. Representative zirconium-based metal-organic frameworks are UiO-66-X, UiO-67, MOF-801-808, NU-1000, PCN-221-230, DUT-52, DUT-84, BUT-10, MIL-140, and the like, and these metal-organic frameworks have different crystal structures and physical and chemical properties depending on types of organic ligands and coordinate bonds constituting the MOFs (Chem. Soc. Rev., 2016, 45: 2327-2367).

A $Zr_6O_4(OH)_4$ cluster is known as a secondary building unit constituting most zirconium-based metal-organic frameworks and may form a coordinate bond, up to 12 coordinate bonds, with a carboxyl group contained in an organic ligand. In this case, since structurally unsaturated coordination sites may act as Lewis acid sites or Bronsted acid sites, catalytic activity may be improved by increasing the concentration of the unsaturated coordination sites by enhancing synthesis methods or conducting a post-processing steps. Alternatively, the $Zr_6O_4(OH)_4$ cluster may be modified with a secondary organic ligand including a particular functional group to increase alkalinity or acidity of the catalyst or improve adsorption selectivity to gas molecules. For example, in the case of UiO-66, known as a metal-organic framework including 12 coordinate bonds without unsaturated coordination sites, a modulated synthesis method capable of increasing the concentration of such unsaturated coordination sites has been reported (Chem. Mater., 2016, 28: 3749-3761), and active sites for catalytic activity of unsaturated coordination sites of zirconium-based metal-organic frameworks produced by synthesis or a post-processing step have been reported (J. Catal., 2017, 352: 401-414; J. Am. Chem. Soc., 2013, 135: 11465-11468; Green Chem., 2016, 18: 4542-4552). Also, Friedel-Crafts acylation, esterification, and isomerization activities have been improved by increasing acidity of MOF-808, known as a metal-organic framework including zirconium-based clusters and having 6 coordinate bonds, by modifying unsaturated coordination sites thereof with sulfuric acid and phosphoric acid (J. Am. Chem. Soc., 2014, 136: 12844-12847). A method of metallizing a divalent metal to $Zr_6O_4(OH)_4$ metal clusters constituting a metal-organic framework having unsaturated metal sites has been reported (Angew. Che. Int. Ed., 2015, 51: 14696-14700), and research has been conducted into increasing activity to catalytic reaction by metallizing a trivalent metal (Inorg. Chem., 2015, 54: 8396-8400). Meanwhile, various studies have recently carried out to remove chemical agents and toxic industrial substances using a metal-organic framework (Angew. Chem. Int. Ed., 2015, 54: 6795-6799; J. Am. Chem. Soc., 2011, 133: 4178-4181; Angew. Chem. Int. Ed., 2016, 55: 13224-13228; PNAS, 2008, 105: 11623-11627; Chem. Eng. Sci., 2015, 124: 118-124). For example, since a zirconium-based MOF may rapidly hydrolyze a nerve agent simulant, it may be a very efficient substance used in protective equipment to remove a large amount of neurotoxins.

Recently, research has been conducted on development of substances having a novel structure for using a zirconium-based metal-organic framework having high hydrothermal stability as a water adsorbent. For example, MOF-801 using fumaric acid as an organic ligand has been reported to be used as an energy-saving water adsorbent since it exhibits high hydrothermal stability and water adsorption capacity while showing regeneration characteristics at low temperature (J. Am. Chem. Soc., 2014, 136: 4369-4381; Science, 2017, 358: 3139). Water adsorption-type cooling apparatuses may use thermal energy generated or absorbed while an adsorbent adsorbs water for industrial, medium- and large-sized building, and household cooling. Water adsorption-type cooling apparatuses designed to regenerate a water adsorbent using solar heat, industrial waste heat, geothermal heat, and the like at 100°C or lower may significantly reduce $CO_2$ generation and increase energy efficiency, and are thus expected to draw attention as an eco-friendly energy-saving technology in the future.

In such water adsorption-type cooling apparatuses, a heat exchanger having an adsorbent-filled layer is an important component that controls performance of the entire system. Commercially, silica gel and zeolite adsorbents are used as such water adsorbents. However, among these water adsorbents, silica gel cannot be reduced in size due to a large amount (volume) relative to cooling capacity since water uptake is small under required relative humidity conditions, and zeolite cannot significantly increase energy efficiency since desorption regeneration is difficult at low temperatures of 100°C or lower.

As described above, the zirconium-based metal-organic framework is a porous material applicable as an adsorbent and the like in various industrial fields as well as catalytic reactions.

[Disclosure]

[Technical Problem]

As a result of intensive efforts to develop MOFs having a novel structure including Zre cluster secondary building units and/or $Zr_{12}$ cluster secondary building units and exhibiting catalytic or adsorptive performance, the present inventors have found that MOFs manufactured using an inexpensive multitopic linker capable of forming double or quadruple bonds are applicable to various fields as a catalyst, an adsorbent, or the like, since they have a novel three-dimensional structure different from those of previously reported zirconium-based metal-organic frameworks, are easily synthesized, and have high porosity and/or hydrothermal stability, thereby completing the present invention.

[Technical Solution]

An object of the present invention is to provide a metal-organic framework (MOF) having a three-dimensional structure including Zre cluster secondary building units (SBUs) and 5,5'-methylenediisophthalic acid ($aH_4mdip$), as multitopic linkers forming coordinate bonds with the $Zr_6$ cluster secondary building units.

Another object of the present invention is to provide a metal-organic framework (MOF) having a three-dimensional (3D) porous structure including: Zre cluster secondary building units and $Zr_{12}$ cluster secondary building units; and unsubstituted or substituted isophthalic acid or an anion thereof, as multiple linkers forming coordinate bonds with the $Zr_6$ and $Zr_{12}$ cluster secondary building units.

Another object of the present invention is to provide a method of manufacturing the MOF, the method including adding a Zr precursor to a solution prepared by dissolving unsubstituted or substituted isophthalic acid or 5,5'-methylenediisophthalic acid, as a multitopic linker, in a first solvent, and performing a reaction.

Another object of the present invention is to provide a composition for a catalyst or an adsorbent including the MOF.

Another object of the present invention is to provide a composition for adsorbing water including the MOF as a water adsorbent and regenerated at a low temperature.

Another object of the present invention is to provide a composition for adsorbing and separating a gas including the MOF as a gas adsorbent.

[Advantageous Effects]

The MOF of the present invention is a substance having a 2D and/or 3D porous structure formed by including Zre cluster secondary building units and/or $Zr_{12}$ cluster secondary building units, and multitopic linkers capable of forming double quadruple bonds therewith. Since the MOF has an intrinsic structure, catalytic or adsorptive performance, and high water adsorption/desorption capacity, and is regenerated by desorbing most adsorbed water at a low temperature, water adsorption-type heat exchangers having excellent thermal efficiency, i.e., regenerated with small energy, may be configured using the MOF as a water adsorbent.

[Brief Description of Drawings]

FIG. 1 shows an XRD pattern of Zr-mdip-A MOF (upper) and nitrogen sorption isotherms (lower) of a sample boiled in a 12 M hydrochloric acid solution, a sample stirred in an aqua regia solution for 24 hours or more at room temperature, and an untreated sample.

FIG. 2 shows a crystal structure of Zr-mdip-A MOF. (a) shows warped cubic pockets having a large volume but small windows and free void spaces each having a size of 6 Å $\times$ 6 Å and located therebetween along the c-axis, (b) shows warped cubic pockets (green spheres) separated by free void spaces indicating a typical soc-type (cdj-imitating) network topology, and (c) shows a soc-type network having a cdj topology.

FIG. 3 shows a crystal structure of Zr-mdip-B MOF(MIP-20). (a) shows an 8-connected Zre SBU, (b) shows a single Hamdip molecule acting as a tetratopic linker and bonded to 4 separate SBUs, (c) shows a 3D structure having larger hexagonal channels and smaller triangular channels along the c-axis, (d) shows SBUs interconnected via $H_4$mdip molecules observed in the b-axis, and (e) shows a csq topology network of an MOF. Hydrogen is omitted for brevity, green represents zirconium (Zr), black represents carbon (C), and red represents oxygen (O).

FIG. 4 shows structural stability of Zr-mdip-B MOF. (a) and (c) show XRD patterns of Zr-mdip-B MOF measured after treatment under severe processing conditions, and (b) and (d) are nitrogen sorption isotherms of samples treated under severe processing conditions corresponding to those of (a) and (c), respectively.

FIG. 5 is a graph illustrating mechanical stability of Zr-mdip-B MOF.

FIG. 6 is a graph illustrating water adsorption isotherms of Zr-mdip-B MOF at various temperatures (20°C, 30°C, 40°C, 50°C, and 60°C).

FIG. 7 is a graph illustrating results of repeated water adsorption/desorption tests of Zr-mdip-B MOF under low-temperature regeneration conditions (63°C).

FIG. 8 shows a) a $Zr_6$ cluster secondary building unit and b) a $Zr_{12}$ cluster secondary building unit constituting Zr-IPA-R MOF and c) a crystal structure of Zr-IPA-H formed thereof.

FIG. 9 shows XRD patterns of Zr-IRA-R MOF according to types of functional groups (upper) and XRD patterns of Zr-IRA MOF after hydrothermal treatment and treatment with an acidic or basic solution to confirm hydrothermal stability and chemical stability (lower).

FIG. 10 is a graph illustrating nitrogen sorption isotherms at 77L according to types of functional groups of Zr-IRA-R MOF.

FIG. 11 is a graph illustrating thermogravimetric analysis results of Zr-IRA-R MOF.

FIG. 12 is a diagram illustrating catalytic activity of transfer hydrogenation of HMF and iso alcohol using Zr-MOF.

FIG. 13 is a graph illustrating adsorption isotherms of Xe gas according to temperature and dual-site Langmuir model optimization curve.

FIG. 14 is a graph illustrating adsorption isotherms of Kr gas according to temperature and dual-site Langmuir model optimization curve.

**[Best Mode for Carrying Out the Invention]**

A first aspect of the present invention provides a metal-organic framework (MOF) having a three-dimensional (3D) structure including Zre cluster secondary building units (SBUs) and 5,5'-methylenediisophthalic acid ($H_4$mdip) as multitopic linkers forming coordinate bonds with the $Zr_6$ cluster secondary building units.

The metal-organic framework according to the first aspect of the present invention may be represented by Formula 1:

$$[Zr_6(\mu_3\text{-}O)_{4+x}(\mu_3\text{-}OH)_{4-2x}(mdip)_a(X1)b(OH)_c].$$

In this regard, in Formula 1, $0 \leq x \leq 2$, $1.3 \leq a \leq 2.2$, $0 \leq b \leq 6$, $0 \leq c \leq 6$, and X1 may include at least one anion selected from the group consisting of formate, acetate, nitrate, fluoride, chloride, bromide, sulfate, phosphate, alkoxide, and hydroxide.

However, the first aspect of the present invention includes any MOFs having a 3D porous structure including Zre cluster secondary building units and 5,5'-methylenediisophthalic acid as multitopic linkers forming coordinate bonds with the $Zr_6$ cluster secondary building units, and is not limited to the compound of Formula 1.

For example, the metal-organic framework according to the first aspect of the present invention shows an X-ray diffraction (XRD) pattern having main peaks at a $2\theta$ of $7.14° \pm 0.2°$, $10.1° \pm 0.2°$, $12.4° \pm 0.2°$, and $14.38° \pm 0.2°$. The XRD pattern may be measured by using a Cu K-$\alpha$ beam line ($\lambda$ = 0.15418 nm) and positions of the peaks may be shifted when a different beam line is used for the measurement. This may be commonly applied to XRD analysis of the metal-organic framework of the present invention hereinafter.

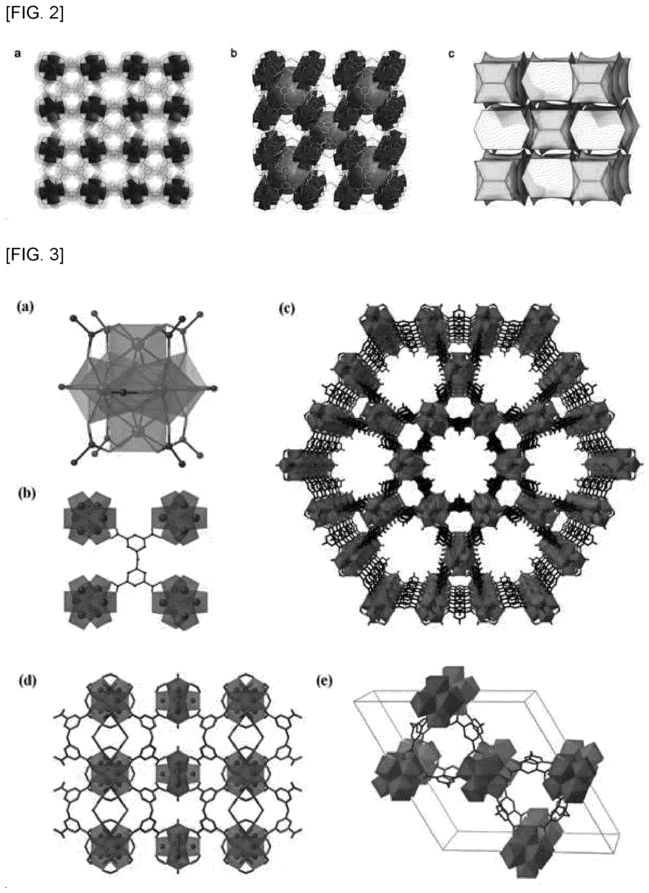

In this case, since the MOF according to the first aspect of the present invention has a crystal structure having a cubic space group formed by bonds between $COO^-$ functional groups of the multitopic linkers and the $Zr_6$ cluster secondary building units as shown in FIG. 2, the MOF may be a crystalline substance forming a soc-type (cdj topology) 3D framework including warped cubic pockets and free void spaces (hereinafter referred to as Zr-mdip-A or MIP-201).

For example, the MOF may be a crystalline substance having lattice constants (cell parameters, with a deviation of $\pm$ 10%) of a = 24.703(5) Å and V = 15075.6(3) Å$^3$ and forming a soc-type network, without being limited thereto.

Alternatively, the MOF according to the first aspect of the present invention may exhibit an XRD pattern having main peaks at a 2θ of 3.98° $\pm$ 0.2°, 7.70° $\pm$ 0.2°, and 10.34° $\pm$ 0.2°.

In this regard, since the MOF according to the first aspect of the present invention has a crystal structure having a hexagonal space group formed by bonds between COO$^-$ function groups of the multitopic linkers and the Zr$_6$ cluster secondary building units as shown in FIG. 3, the MOF may be a substance having a Kagome-type 3D framework including two types of channels, hexagonal and triangular channels, separately running along the c-axis (hereinafter referred to as Zr-mdip-B or MIP-200). For example, the MOF may be a crystalline substance having lattice constants (with a deviation of $\pm$ 10%) of a = b = 25.507(3) Å, c = 11.678(3) Å, and V = 15075.6(3) Å$^3$ and forming a csq topology network by a close packing mode along the a-b plane, without being limited thereto.

A second aspect of the present invention provides a metal-organic framework (MOF) having a 3D porous structure including: Zre cluster secondary building units and Zr$_{12}$ cluster secondary building units; and unsubstituted or substituted isophthalic acid or an anion thereof, as multitopic linkers forming coordinate bonds with the Zr$_6$ and Zr$_{12}$ cluster secondary building units.

The MOF according to the second aspect disclosed herein, but not part of the claimed invention may be represented by Formula 2:

$$[Zr_6(\mu_3\text{-}O)_{4+y}(\mu_3\text{-}OH)_{4-2y}(X2)_d(IPA\text{-}R)_e(OH)_{12-d-2e}]_3 \cdot [Zr_{12}(\mu_3\text{-}O)_{8+z}(\mu_3\text{-}OH)_{8-2z}(\mu_2\text{-}OH)_6(X2)_f(IPA\text{-}R)_g(OH)_{18-f-2g}].$$

In this regard, in Formula 2, $0 \leq y < 2$, $0 \leq z < 4$, $0 \leq d \leq 12$, $0 < e \leq 4$, $0 \leq f \leq 18$, $0 < g \leq 6$, R is hydrogen or a substituent on isophthalic acid, and X2 may include at least one anion selected from the group consisting of formate, acetate, nitrate, fluoride, chloride, bromide, sulfate, phosphate, alkoxide, and hydroxide.

However, the second aspect of the disclosed, but not claimed includes any MOFs having a 3D porous structure including the Zr$_6$ cluster secondary building units and the Zr$_{12}$ cluster secondary building units; and unsubstituted or substituted isophthalic acid or an anion thereof as the multitopic linkers forming coordinate bonds with the Zr$_6$ and Zr$_{12}$ cluster secondary building units, and is not limited to the compound of Formula 2.

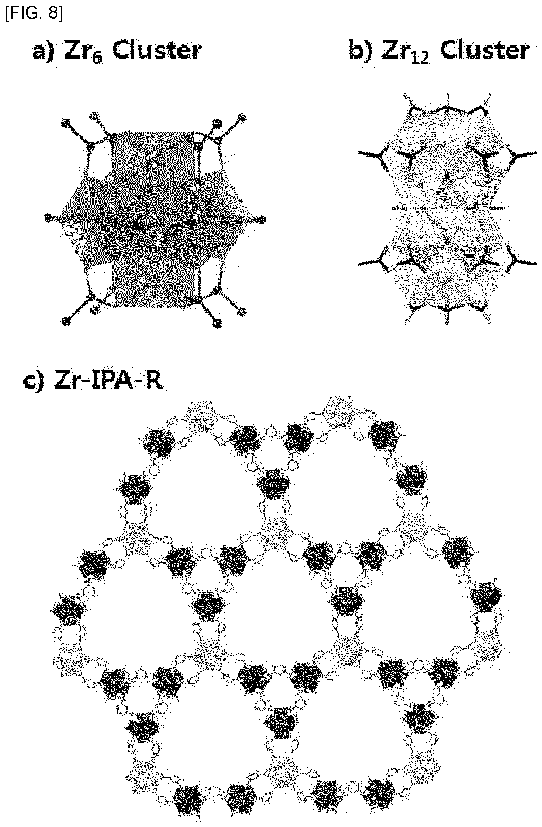

The MOF(MIP-206) according to the second disclosed, but not claimed invention including unsubstituted isophthalic acid or an anion thereof as the multitopic linker may have a crystal structure having a hexagonal space group formed by bonds between carboxylate anions of IPA-R organic ligand and either one of or both of the Zr$_6$ cluster secondary building units and the Zr$_{12}$ cluster secondary building units as shown in FIG. 8. For example, the MOF may have a layered crystal structure in which adjacent two-dimensional (2D) layers are stacked along the c-axis, each 2D layer having hexagonal pores having a diameter of 20 Å to 25 Å and formed by coordinate bonds among the Zr$_6$ cluster secondary building units, the Zr$_{12}$ cluster secondary building units, and COO$^-$ functional groups of the multitopic linkers and triangular pores formed between the Zr$_6$ cluster secondary building units (wherein the triangular pore is smaller than the hexagonal pore). Specifically, the MOF may have a layered crystal structure in which porous structures are stacked along the c-axis, each porous structure having hexagonal pores having a diameter of 20 Å to 25 Å and formed as the Zr$_6$ cluster secondary building units and the Zr$_{12}$ cluster secondary building units, in a ratio of 3:1, are bound to 2 COO$^-$ groups contained in the IPA-R multitopic linker and triangular pores formed by the Zr$_6$ secondary building units and having a smaller pore size.

In this case, isophthalic acid or an anion thereof substituted with a functional group other than t-butyl or sulfonic acid may include at least one functional group, as a substituent, selected from the group consisting of hydroxyl, nitro, amino, halide, C$_{1-10}$ alkylamine, C$_{1-10}$ alkylimine, C$_{1-10}$ alkylamide, C$_{1-10}$ alkyl, C$_{2-10}$ alkenyl, C$_{2-10}$ alkynyl, C$_{1-10}$ alkyl-halide, C$_{1-10}$ acylhalide, C$_{1-10}$ carbonyl, C$_{6-40}$ aryl, C$_{3-20}$ heterocyclyl, C$_{6-10}$ aryl-C$_{1-10}$ alkyl, C$_{5-10}$ heteroaryl-C$_{1-10}$ alkyl, C$_{1-10}$ cyanate, C$_{1-8}$ alcohol, C$_{1-8}$ alkoxide, C$_{1-8}$ peroxide, sulfonic acid, C$_{1-8}$ sulfonic acid, C$_{1-8}$ thiol, C$_{1-8}$ sulfide, C$_{1-8}$ sulfinyl, C$_{1-8}$ sulfonyl, and C$_{1-8}$ carboxylic acid, without being limited thereto. For example, the functional group may be hydroxyl, nitro, amino, methyl group, or bromine, without being limited thereto.

For example, when the MOF according to the second aspect of the disclosed, but not claimed invention includes isophthalic acid or an anion thereof substituted with a functional group other than t-butyl and sulfonic acid or an anion thereof as a multitopic linker, main peaks may be observed at a 2θ of 3.14° $\pm$ 0.2°, 5.14° $\pm$ 0.2°, 6.06° $\pm$ 0.2°, 7.24° $\pm$ 0.2°, and 8.96° $\pm$ 0.2° with a deviation of $\pm$ 3% in an XRD pattern. In the XRD pattern, in the MOF including isophthalic acid or an anion thereof substituted with a functional group other than t-butyl and sulfonic acid or an anion thereof as the multitopic linker, positions of the main peaks may be slightly shifted, or sometimes additional peaks may be observed according to types of the substituents of the substituted isophthalic acid.

Meanwhile, when the MOF according to the second aspect of the disclosed, but not claimed invention includes isophthalic acid or an anion thereof substituted with t-butyl as the multitopic linker, main peaks may be observed at a 2θ of 2.40° $\pm$ 0.2° and 4.30° $\pm$ 0.2° in the XRD pattern.

In addition, when isophthalic acid or an anion thereof substituted with sulfonic acid or an anion thereof is used as the multitopic linker, the MOF according to the second aspect of the present invention may have structural flexibility, and thus main peaks may be shifted relatively significantly in accordance with analysis conditions of XRD. For example, the MOF may be present in a partially hydrated powder state at 25°C with a relative humidity of 50%, and main peaks thereof may be observed at a $2\theta$ of $4.35° \pm 0.2°$, $6.15° \pm 0.2°$, and $8.66° \pm 0.2°$ in the XRD pattern.

A third aspect of the present invention provides a method of manufacturing the MOF of the first aspect, the method including preparing a solution by dissolving unsubstituted or substituted 5,5'-methylenediisophthalic acid, as a multitopic linker, in a first solvent, and adding a Zr precursor to the solution, followed by reaction thereof, wherein the first solvent may be a non-toxic solvent selected from the group consisting of water, monocarboxylic acid hydrate, monocarboxylic acid anhydride, and any mixture thereof.

For example, the reaction may be carried out by a reflux synthesis method or a solvothermal synthesis method, but is not limited thereto. Specifically, the "reflux synthesis method" is a method performed by condensing an evaporated solvent in a cooler and circulating the solvent to a reactor using water, an organic solvent, or any mixed solvent thereof under conditions not shielded from the outside, and the "solvothermal synthesis method" may be a method generally performed under a vapor pressure generated in a reactor at a high temperature in a reaction system shielded from the outside in a solvent that does not contain water. For example, although both the reflux synthesis method and the solvothermal synthesis method may be applied to Zr-mdip-A (MIP-201) as an example of the MOF of the first aspect of the present invention, it may be more economical to use the reflux synthesis method. Meanwhile, in the synthesis of Zr-mdip-B (MIP-200), as another example of the MOF of the first aspect of the present invention, and Zr-IPA-R, as an example of the MOF of the second aspect of the present invention, it may be advantageous to use the solvothermal synthesis method.

For example, the reaction may be conducted at a temperature of 25°C to 250°C, specifically 60°C to 200°C, more specifically 100°C to 180°C, without being limited thereto. For example, when the reaction is conducted at a temperature lower than 25°C, crystal formation rates may decrease, and the yield of the resulting MOF may be very low. In contrast, when the reaction is conducted at a high temperature exceeding 250°C, synthesis time may be reduced, but a high-temperature acidic solution may corrode the reactor or excessively increase pressure during the reaction, making it impossible to perform the reaction using a general reactor, or increasing costs for designing a pressure-resistant reactor. The reaction may be performed for 6 to 120 hours, specifically 12 to 72 hours in the temperature range, without being limited thereto. The reaction time may be adjusted in consideration of the reaction temperature. For example, the reaction may be completed within a relatively short time at a higher temperature, but the embodiment is not limited thereto. However, when the synthesis time is too short, the yield and/or crystallinity of a final product may deteriorate. When the synthesis time is too long, manufacturing costs may increase and productivity may decrease.

Meanwhile, temperature may be raised to the reaction temperature within 4 hours, preferably, within 2 hours.

For example, the multitopic linker solution may further include a second solvent selected from polar organic compounds, such as alcohols, ketones, esters, and cyclic esters, not containing nitrogen or sulfur. Non-limiting examples of the second solvent include methanol, ethanol, acetone, ethyl acetate, tetrahydrofuran, or any mixture thereof. By further including the second solvent, solubility of the multitopic linker may be improved and uniformity of the synthesis solution may be increased, resulting in more effective crystal formation.

In the manufacturing method of the present invention, inorganic or organic salts of zirconium, zirconium metal, or zirconium oxides may be used as the Zr precursor. For example, an inorganic salt of zirconium, specifically, zirconium hydrochloride, may be used, without being limited thereto.

Zirconium may be added in the manufacturing method of the present invention such that a molar ratio of zirconium to the multitopic linker is 1 to 4:1, but the amount of zirconium is not limited thereto. Specifically, the amount of zirconium relative to that of the multitopic linker may be selected within the above range in accordance with a desired crystal structure to be synthesized. For example, in the case of synthesizing Zr-mdip-A, the molar ratio of Zr/mdip may be 1 to 4 or 1.5 to 3. Meanwhile, in the case of synthesizing Zr-mdip-B, the molar ratio of Zr/mdip may be 2 to 5 or 2.5 to 4. Furthermore, in the case of synthesizing Zr-IPA-R, the molar ratio of Zr/IPA-R may be 0.75 to 2.5 or 1 to 2, without being limited thereto. However, when the amount of zirconium is less than the above ranges, the amount of unreacted linker remaining after the reaction increases, resulting in increased manufacturing costs, the number of purification to remove the unreacted linker increases, resulting in increased costs and processing steps for wastewater treatment, and synthesis yield and/or crystallinity decrease, resulting in deterioration in stability of the synthesized MOF. In contrast, when the amount of zirconium is greater than the above ranges, the amounts of unreacted zirconium ions and inorganic salt ions remaining after the reaction increase, resulting in loss of zirconium and increased costs for wastewater treatment, and synthesis yield of and/or crystallinity of the product decreases, resulting in unnecessary consumption of energy and/or time, for example, by increasing synthesis temperature or reaction time to compensate therefor. Furthermore, when the amount of zirconium is too high or too low relative to the linker, impurity crystals having structures different from those of desired structures, e.g., Zr-mdip-A, Zr-mdip-B, and Zr-IPA-R, may be produced.

The manufacturing method of the present invention may further include filtering and collecting a MOF product after the reaction and/or purifying the product to recover the final product with a high yield. Via the additional steps, unreacted residual metal precursors, linker molecules, and solvents coexisting in the reaction solution may be removed. To this end, water or a polar organic solvent may be used as a purification solvent, without being limited thereto. If required, these processes may be conducted while heating the product in a purification solvent at a constant temperature, but the embodiment is not limited thereto. The purifying step may be performed once or repeated several times to improve purity, and the number of times is not limited. The filtration may be performed using a filter or by decantation or centrifugation, but is not limited thereto, and any method commonly used in the art to recover solid products produced by a solution reaction may be used.

Furthermore, the manufacturing method of the present invention may further include drying the product to obtain the MOF in a powder form. The drying step may be performed after filtering and recovering the MOF and/or purifying the MOF once or several times. For example, the drying step may be performed by removing 95% or more of the solvent contained in pores by heating a crystal powder cake finally separated from the purification solvent, but is not limited thereto. For example, the drying step may be performed by reducing pressure, heating, or the like, but is not limited thereto, and any drying method commonly used in the art to dry porous solid products may also be used without limitation.

A fourth aspect of the present invention provides a composition for a catalyst or an adsorbent including the MOF of the first or second aspect of the present invention.

A fifth aspect of the present invention provides a composition for adsorbing water including the MOF of the first or second aspect of the present invention as a low-temperature regeneration water adsorbent.

A sixth aspect of the present invention provides a composition for adsorbing and separating a gas including the MOF of the first or second aspect of the present invention as a gas adsorbent.

For example, the metal-organic framework according to the present invention may be used for adsorbents, gas storage substances, sensors, membranes, functional thin films, drug delivery substances, catalysts, catalyst supports, and the like for the purpose of removing a substance in an adsorbed form or delivering a substance in a form supported in pores. For example, the metal-organic framework may be used to trap guest molecules smaller than the pore size or separate molecules by size using the pores, and using catalytic reaction using an active metal contained in the metal-organic framework.

Adsorption is a phenomenon in which gas-phase component is physically or chemically adsorbed onto a porous surface of a solid. In general, as a reaction temperature lowers, adsorption rates and adsorbed amounts increases. Adsorbed material may be desorbed using pressure or by raising the temperature.

Physical adsorption is bonds formed by Van der Waals forces between gas molecules and active sites of the surface of an adsorbent and occurs when attractive interaction of gas molecules with solids is greater than mutual attraction between gas molecules. In the equilibrium state, a partial pressure of a substance adsorbed to the adsorbent is the same as a partial pressure of a gas phase in contact therewith. As a partial pressure of a solute relative to the adsorbent increases, an adsorbed amount increases. A substance having a greater molecular weight is more easily adsorbed thereto. Since physical adsorption is a reversible bond, the adsorbent may be easily regenerated, and the adsorbed substance may be easily desorbed by raising the temperature or reducing pressure.

In contrast, since chemisorption occurs by chemical reaction between an adsorbent and an adsorbed substance, an adsorption reaction includes destruction and re-formation of chemical bonds. Due to strong tendency to irreversible bonds, regeneration does not easily occur.

In addition, due to the ability to adsorb water and the ability to desorb most adsorbed water at a relatively low temperature, e.g., at 100°C or lower, specifically, in the range of 40°C to 100°C, the MOF of the present invention may be used in a dehumidifying unit of an adsorption/desorption-type heat exchanger as a water adsorbent. Furthermore, the adsorption/desorption-type heat exchanger may be included in water adsorption-type heating and cooling apparatuses.

The water adsorption-type heating and cooling apparatuses are apparatuses that convert thermal energy generated or absorbed while an adsorbent included in the heat exchanger adsorbs and desorbs water to be used in industrial, medium- and large-sized building, and household cooling. Particularly, since water adsorption-type heating and cooling apparatuses designed to be driven by solar energy, industrial waste heat, geothermal heat, and the like at 100°C or lower in regeneration of the water adsorbent may significantly reduce $CO_2$ generation and increase energy efficiency, they are thus expected to draw attention as an eco-friendly energy-saving technology in the future. In such water adsorption-type heating and cooling apparatuses, a heat exchanger having an adsorbent-filled layer is an important component that controls the overall performance of a system. Commercially, silica gel and zeolite adsorbents are used as such water adsorbents. However, among these water adsorbents, silica gel cannot be reduced in size due to the large amount (volume) required relative to cooling capacity since water uptake is small under required relative humidity conditions, and zeolite cannot significantly increase energy efficiency since desorption regeneration is difficult at low temperatures below 100°C. However, since the MOF of the present invention may be driven by the above-described solar energy, industrial waste heat, geothermal heat, and the like due to high water adsorption rate in a provided relative humidity, e.g., in a relative humidity of 10% to 50%, and an excellent ability to desorb most adsorbed water at a low temperature of about 63°C, the MOF is useful in saving energy.

In an embodiment of the present invention, excellent catalytic activity and high selectivity were confirmed in conversion reaction of hydroxymethylfurfural (HMF) and iso alcohol into dihydroxymethylfuran (DHMF) by transfer hydrogenation using the MOF of the present invention as a catalyst (Table 2). Furthermore, it was confirmed that the MOF of the present invention adsorbs vapor-phase polar and non-polar organic compounds. This indicates that the MOF of the present invention may be used not only in producing DHMF from HMF by transfer hydrogenation with high selectivity, but also in processes of trapping, storing, and/or separating various vapor-phase organic compounds.

MODE OF DISCLOSURE

Hereinafter, the present invention will be described in more detail with reference to the following examples. However, the following examples are merely presented to exemplify the present invention, and the scope of the present invention is not limited thereto.

**Example 1: Synthesis of Zr-mdip-A (Formula 1) as Novel Zr-MOF**

Zr-mdip-A (MIP-201) compound was prepared under reflux conditions. A preparation method will be described in detail. 5.1 g (14.83 mmol) of $H_4$mdip linker powder was added to a 1 L round-bottom flask, 300 mL of water was added thereto, and then the flask was stirred vigorously at room temperature for 20 minutes to prepare a homogeneous solution or suspension. After adding 10.8 g (30.39 mmol) of $Zr(SO_4)_2 \cdot 4H_2O$ powder to the mixed solution, 100 mL of acetic acid was added thereto. Then, the round-bottom flask containing the reaction solution was equipped with a reflux cooling system and heated under reflux conditions to maintain the reaction for 12 to 24 hours. After cooling the flask to room temperature, a target product Zr-mdip-A MOF was collected by filtration, washed with ethanol, and air-dried to obtain a target product in a powder form with a yield of 93%.

**Example 2: X-ray Diffraction Analysis and Nitrogen Sorption of Zr-mdip-A MOF**

Zr-mdip-A powder obtained in Example 1 was loaded in a holder, and XRD analysis was performed using a Cu K-$\alpha$ beam line ($\lambda$ = 0.15418 nm). Furthermore, in order to evaluate chemical stability of a sample, 0.5 g of Zr-mdip-A powder was dispersed in 50 mL of 12 mol of an aqueous hydrochloric acid solution, boiled at a temperature of 100°C to 110°C for 24 hours, purified by filtration, and treated with hydrochloric acid to thereby obtain a sample. Similarly, Zr-mdip-A powder was dispersed in aqua regia prepared using nitric acid and hydrochloric acid and stirred at room temperature for 24 hours to obtain a sample treated with aqua regia. As a result of measuring and comparing XRD patterns of the obtained samples, the same XRD pattern as that before treatment was observed.

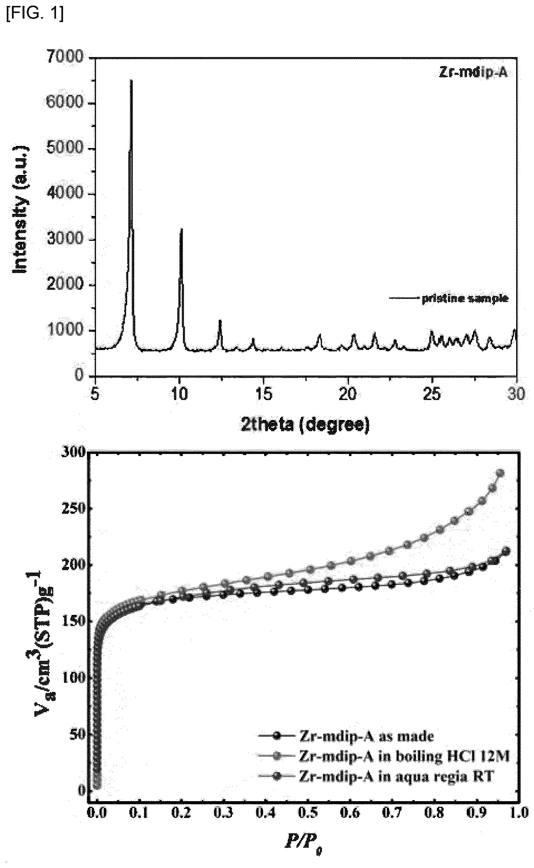

Furthermore, for nitrogen sorption analysis of the samples, the powder sample was heat-treated at 150°C in a vacuum of $1.33 \times 10^{-2}$ Pa ($10^{-4}$ Torr) or less for 6 hours and then physical adsorption isotherm of nitrogen was measured at a liquid nitrogen temperature (-196°C). The experimental results are shown in FIG. 1. As a results of measuring nitrogen sorption isotherm, Zr-mdip-A had a surface area of 720 $m^2$/g to 730 $m^2$/g, which was not significantly changed after treatment with hydrochloric acid and aqua regia, indicating excellent chemical durability against acidic solutions.

**Example 3: Crystal Structure of Zr-mdip-A MOF (MIP-201)**

A crystal structure of Zr-mdip-A obtained based on XRD analysis results was confirmed as a cubic I23 (No. 197) space group having lattice constants (cell parameters) of a = 24.703(5) Å and V = 15075.6(3) $Å^3$ (FIG. 2). It was characterized by a 3D porous framework formed of $Zr_6(\mu_3\text{-}O)_4(\mu_3\text{-}OH)_4$ cluster secondary building units (SBUs) 6-connected to 5,5'-methylenediisophthalate (mdip) tetratopic linker molecules which acted as separators and spacers (FIG. 2). Each of the $Zr_6$ cluster SBUs includes 6 carboxylate groups from 6 different mdip linker molecules and 6 terminal formate groups located near the equatorial plane (FIG. 3(a)).

4 carboxylate groups of the mdip linker are completely deprotonated to connect 8 separate Zr(IV) atoms to neighboring 4 SBUs. Due to high flexibility of the methylene group, length and width of the mdip linker molecules may be adjusted in accordance with requirements for corresponding connection. Thus, interconnection with 8 adjacent SBUs forming warped cubic pockets having a diameter of 1.3 nm may be possible. However, since the sizes of open windows of the pockets are too small (2.4 Å), guest molecules have difficulty entering. Free pores having an accessible size of 6 Å $\times$ 6 Å are present between spaces of the neighboring pockets and the free pores have a Brunauer-Emmett-Teller (BET) surface area of 730 $m^2 \cdot g^{-1}$, which is theoretically deduced by nitrogen porosimetry, and a total pore volume of 0.28 $cm^3$/g. The overall 3D structure of Zr-mdip-A is formed by cubic pocket packing completely separated to have free void spaces and shows a typical cdj topology network. Zr-mdip-A is the first known example of a soc-type network in the Zr-MOF.

**Example 4: Zr-mdip-B MOF (MIP-200, Formula 1) as Novel Zr-MOF**

Zr-mdip-B compound was prepared under a solvothermal synthesis condition. A preparation method will be described in detail. 425 mg (1.25 mmol) of $H_4$mdip linker powder was added to a 125 mL Teflon reactor, and 40 mL of acetic anhydride was added thereto to dissolve and disperse an organic ligand at room temperature. Then, after adding 860 mg (3.74 mmol) of $ZrCl_4$ thereto and stirring the mixture at room temperature for 20 minutes or more, 25 mL of formic acid was added thereto, followed by further stirring for 20 minutes or more. Subsequently, the Teflon reactor was sealed in an autoclave and heated to 120°C within 2 hours and maintained at 120°C for 48 to 72 hours. After cooling the mixture to room temperature, a predicted product Zr-mdip-B MOF was collected by filtration, washed with ethanol, and air-dried. This preparation method may be applied to smaller-scale synthesis or larger-scale synthesis using a reactor having an appropriate size.

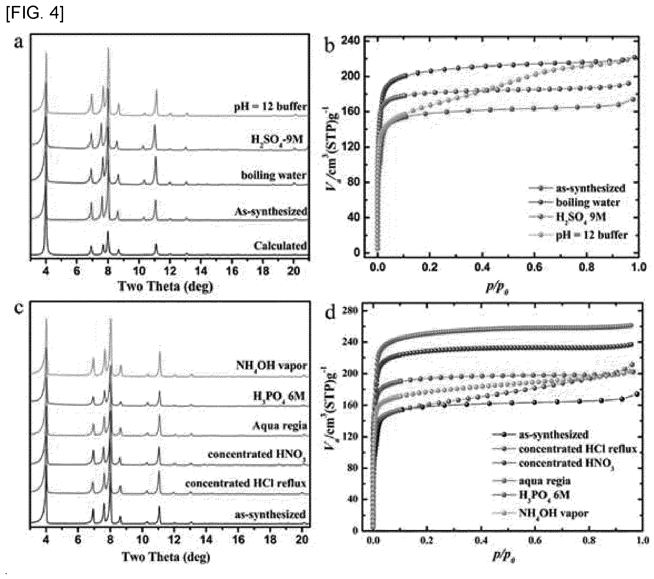

The crystal structure of Zr-mdip-B powder prepared according to the method described above was analyzed by determining the crystal structure based on powder X-ray diffraction (PXRD) data obtained using a revised version of the Automated Assembly of Structure Building Units (AASBU) method (FIG. 4(a)) and identifying the crystal structure based on synchrotron XRD data of a suitable single crystal. Zr-mdip-B $[ZreO_4(OH)_4(mdip)_2(formate)_4]$ was crystalized in a hexagonal P6/mmm (number 191) space group having unit lattice constants of a = b = 25.507(3) Å, c = 11.687(3) Å, and V = 6585.2(7) Å$^3$. As shown in FIG. 3, typical 8-connected $Zr_6(\mu_3\text{-}O)_4(\mu_3\text{-}OH)_4$ cluster secondary building units including 8 linker carboxylate groups and 4 terminal formate groups are interconnected by Hamdip molecules, resulting in formation of a Kagome-type 3D framework having hexagonal and triangular channels separately running along the c-axis. While a 1D hexagonal channel is characterized by having a nano-scale free diameter of 13 Å, a size of the smaller triangular tunnel was observed to be 4.5 Å. However, the linker molecule adapted a close packing mode along the a-b plane. This formed a very limited pore window that no guest molecules could approach. Therefore, the crystal structure of Zr-mdip-B may be summarized as a 3D microporous framework including 1D channels having a typical csq topology network.

**Example 5: Analysis of Properties of Zr-mdip-B**

Zr-mdip-B powder obtained in Example 4 was loaded in a holder, and XRD analysis was performed using a Cu K-$\alpha$ beam line ($\lambda$ = 0.15418 nm). Furthermore, in order to analyze nitrogen sorption, the powder sample was heat-treated at a temperature of 150°C in a vacuum of $1.33 \times 10^{-2}$ Pa ($10^{-4}$ Torr) for 6 hours or more, and physical adsorption isotherms of nitrogen were measured at liquid nitrogen temperature (-196°C).

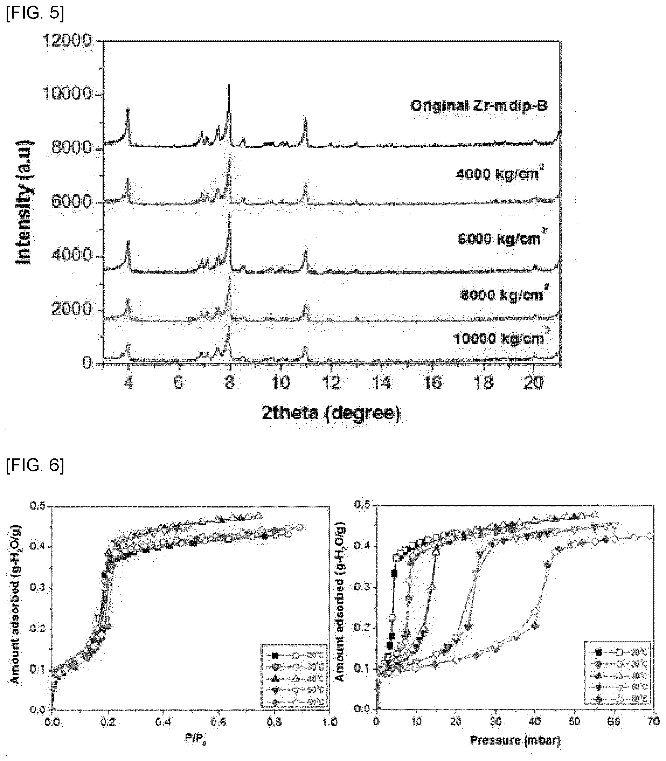

Robust porosity of the Zr-mdip-B structure was identified by measuring nitrogen sorption of samples treated with different conditions compared to the theoretical conditions derived from computer calculation. All adsorption isotherms were identified as type 1 regardless of processing methods for activation applied thereto, indicating microporous properties of an accessible space inside the structure. Stability of the Zr-mdip-B crystal structure was evaluated by exposing the sample obtained by purification to boiling water, an acidic aqueous solution, a basic aqueous solution, and a basic gas for 1 day or more (FIG. 4). As a result, as shown in FIG. 4, it was confirmed that the crystal structure was maintained in a stable state based on an XRD pattern obtained after treatment under various conditions. In the results of the nitrogen sorption isothermal experiment using the sample after the treatment under various conditions, the sample washed with ethanol and refluxed with water at 100°C for 1 day had a BET surface area of 981 m$^2$/g and a total pore volume of 0.37 cm$^3$/g. The $S_{BET}$ surface area was increased to up to 1050 m$^2$/g, and the pore volume was increased to up to 0.36 cm$^3$/g by additional hydrothermal treatment or acid treatment, and thus substitution of terminal formate groups with smaller hydroxyl groups or water molecules as well as efficient exchange of a guest solvent in pores was achieved by simple washing with boiling water or general acid treatment. These results show that the metal-organic framework prepared according to the present embodiment is very stable, and pores thereof may be adjusted by various treatment conditions. In addition, experimental data was measured to be lower than the calculated values, i.e., the $S_{BET}$ of 1260 m$^2$/g and the pore volume of 0.55 cm$^3$/g, indicating that complete accessibility of nitrogen molecules into the small triangular channel was difficult. However, this is not a problem in using the metal-organic framework as an adsorbent and a catalyst. Also, for measurement of mechanical stability, a certain amount of Zr-mdip-B powder was added to a mold and pressed with a constant force using a press, followed by XRD analysis, and the results are shown in FIG. 5. As shown in FIG. 5, it was confirmed that the initial crystal structure was maintained at at least 60% even after applying pressure thereto.

**Example 6: Water Cyclic Test of Zr-mdip-B**

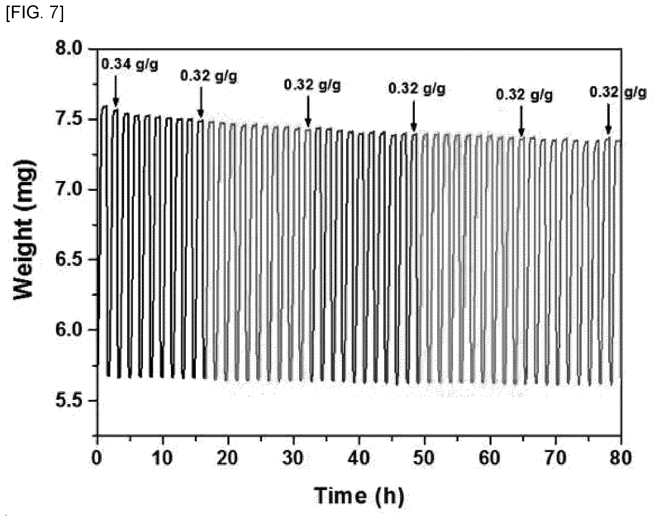

Water adsorption and desorption performance of Zr-mdip-B MOF prepared in Example 4 as an adsorbent was evaluated using a thermogravimetric analyzer equipped with a water generator (TGA, DT Q600, TA Instruments, Universal V4.5A). 5 mg to 10 mg of a sample in powder form was mounted in a TGA holder and heat-treated at 100°C for 1 hour, the temperature of the sample was fixed at 30°C, and then a water-containing gas having a relative humidity of 35% was flowed to the dry sample by adjusting the temperature and gas flow rate of the water generator. In this case, weights of the sample increased relative to the dry powder sample as a result of adsorbing water were collected in real time from measured weights. After adsorption was completed, desorption was performed at 63°C while flowing a gas containing 6% of water to the sample, and the adsorption and the desorption were repeated to measure amounts of water adsorption and desorption according to water adsorption cycles. As a result, an adsorption capacity of 32% relative to the weight of the dry powder was observed, and it was confirmed the adsorption/desorption capacity was constantly maintained even after repeating adsorption and desorption based on the results of repeating 50 cycles of experiments (FIG. 7). Furthermore, the water adsorption/desorption capacity of Zr-mdip-B obtained from water adsorption isotherms and energy storage capacity of an adsorption-type cooling system calculated from the obtained water adsorption isotherms are shown in Table 1 below. As shown in Table 1, a high adsorption capacity of 0.39 g/g per dry weight was observed under the relative humidity condition of 30%, and an energy storage capacity calculated when applied to an adsorption-type cooling system was 231 Wh/kg based thereon.

Table 1

| Substance | Crystal density (g/cm$^3$) | Water uptake[a] | | Adsorption capacity[b] | | Heat from evaporator[c] | | Energy storage capacity[d] | |
|---|---|---|---|---|---|---|---|---|---|
| | | (g/g) | (g/cm$^3$) | (g/g) | (g/cm$^3$) | (Wh/kg) | (kWH·m$^3$) | (Wh/kg) | (kWH·m$^3$) |
| Zr-mdip-B (MIP-200 ) | 1.16 | 0.39 | 0.45 | 0.30 | 0.35 | 127 (156 ) | 147(182) | 231 | 268 |
| a: water uptake @ 30°C and P/P$_0$ = 0.3b: working capacity, adsorption @ 30°C and RH 35% - desorption @ 63°C and RH 10% c: heat from evaporator, conditions: $T_{evaporator}$ = 10°C, $T_{condenser}$ = 30°C and $T_{desorption}$ = 63°C ($T_{desorption}$ = 70°C) d: energy storage capacity, energy storage capacity when adsorption-desorption was performed once, conditions: $T_{evaporator}$ = 10°C, $T_{condenser}$ = 30°C and $T_{desorption}$ = 70°C | | | | | | | | | |

## Comparative example 7: Preparation of Zr-IPA-R (Formula 2) as Novel Zr-MOF

In this example, a method of synthesizing Zr-MOF using isophthalic acid as a raw material of an organic ligand is described. Specifically, 0.332 g (2 mmol) of isophthalic acid was weighed and added to a 23 mL Teflon reactor, and 5 mL of formic acid was added thereto while stirring at room temperature to disperse the linker solid. After adding 0.699 g (3 mmol) of ZrCl$_4$ powder to the reaction mixture, 2.5 mL of acetone was added to facilitate dissolution of the reactants. After stirring at room temperature for 20 minutes, the Teflon reactor was sealed in an autoclave and maintained at 120°C for 48 hours. The reactants were cooled to room temperature, and an expected white product was collected by filtration, washed with boiling acetone, and air-dried.

## Comparative example 8: Analysis of Properties of Zr-IPA-R

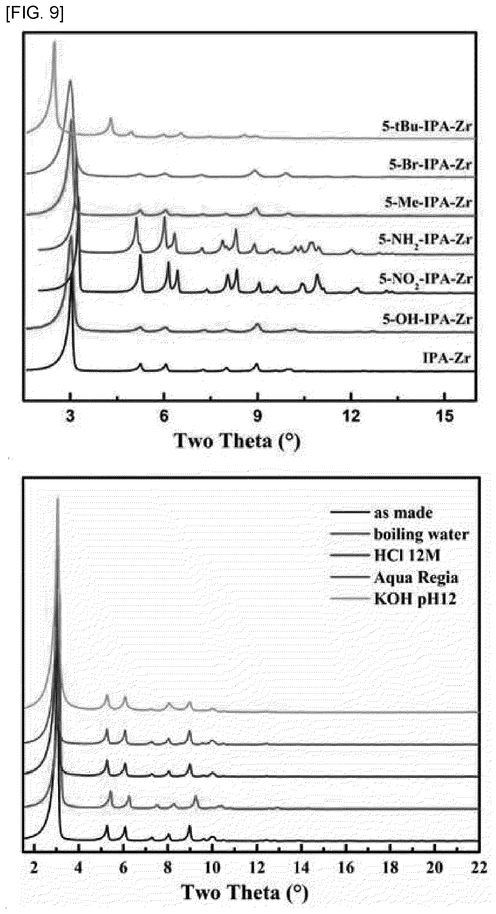

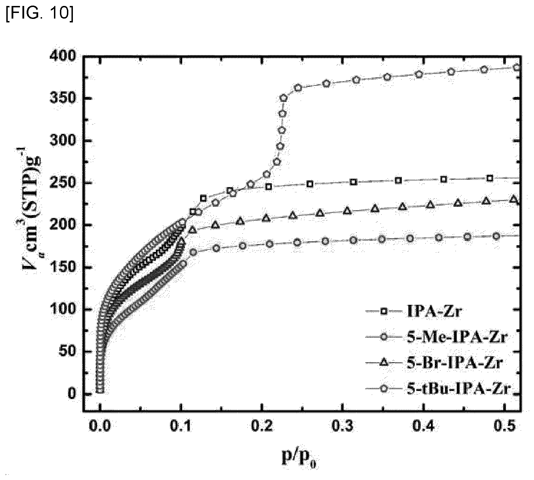

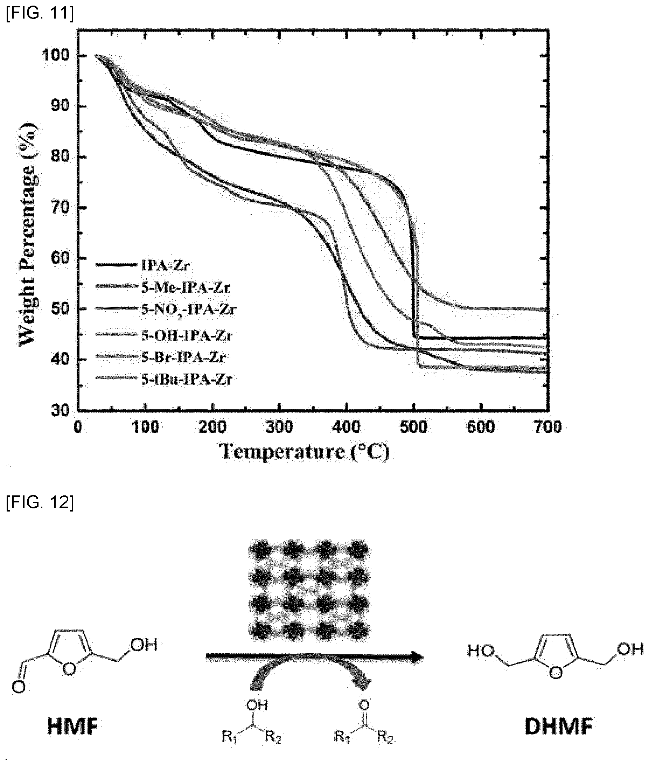

Zr-IPA-R powder obtained in Example 7 was loaded in a holder and XRD analysis was performed using a Cu K-$\alpha$ beam line ($\lambda$ = 0.15418 nm), and the results are shown in FIG. 9. As shown in FIG. 9, in the case of Zr-IPA without functional groups, intrinsic diffraction patterns were observed at a 2θ of 3.14°, 5.14°, 6.06°, and 8.96°. When hydroxyl groups (-OH), methyl groups (-CH$_3$), and bromine (-Br) are used as functional groups other than t-butyl and sulfonic acid (-SO$_3$H) groups, mostly similar XRD patterns were observed. Overall, the shift of main peaks was observed to be within 5% of the 2θ values in the XRD pattern of the Zr-IPA sample. Meanwhile, in the case of the sample having the amino group (-NH$_2$) and the nitro group (-NO$_2$), additional peaks were observed in the XRD pattern as well as the above-described shift of the main peaks. In contrast, in the case of including t-butyl and sulfonic acid, XRD patterns were different from those of the samples having the functional groups described above. When t-butyl was used as the functional group, main peaks were observed at a 2θ of 2.40° and 4.30° in the XRD pattern. When sulfonic acid was used as the functional group, main peaks were observed at a 2θ of 4.35°, 6.15°, and 8.66° in the XRD pattern. As shown in FIG. 9, upon comparison with the XRD pattern of Zr-IPA, as unsubstituted ligand, main peaks were shifted in the XRD peaks according to the types of introduced functional group within a predetermined range of 2θ, although the XRD pattern was maintained. It may be understood that these changes in XRD patterns are caused by slight differences in crystal structures due to differences in binding angles and binding lengths between the Zr$_6$ and Zr$_{12}$ clusters and the multitopic linker constituting the metal-organic framework in accordance with the functional group of the multitopic linker included in the metal-organic framework. However, the main peaks of the 5-tBu-IPA-Zr sample were shifted to have lower angles unlike the Zr-IPA-R sample including a substituent other than t-butyl. This indicates that the Zr-IPA-tBu metal-organic framework may have larger pores, which were identified in a nitrogen sorption isotherm described below. For nitrogen sorption analysis, the powder sample was heat-treated at a temperature of 150°C in a vacuum of $1.33 \times 10^{-2}$ Pa ($10^{-4}$ Torr) or less for 6 hours, and then a physical adsorption isotherm of nitrogen was measured at liquid nitrogen temperature (-196°C), and the experimental results are show in FIG. 10. Thermogravimetric analysis results obtained by measuring weight decreases of the samples according to the temperature increase while raising the temperature at a rate of 2°C/min under a nitrogen flow are shown in FIG. 11.

In addition, as shown in FIG. 10, a step-like nitrogen sorption isotherm was observed, showing changes in adsorbed amount in two stages as relative pressure increases. All of the MOFs including IPA-Zr, except for 5-tBu-IPA-Zr, showed a gradual increase in an adsorbed amount after a rapid increase in adsorption in the initial stage of adsorption and then an additional increase in an adsorbed amount at a relative humidity of about 0.1. However, the 5-tBu-IPA-Zr MOF showed a significant additional slightly delayed increase in the adsorbed amount at a relative humidity of about 0.2. As described above in the XRD results, this indicates that the 5-tBu-IPA-Zr MOF has pores with different sizes in the crystal structure thereof. In addition, unit lattice constants calculated using the XRD pattern of the 5-tBu-IPA-Zr were a = b = 41.37278(7) Å, c = 17.57647(1) Å, $\alpha = \beta = 90°$, and $\gamma = 120°$, indicating that the MOF has a hexagonal plate-like crystal structure.

Furthermore, as shown in FIG. 10, although Zr-IPA-R showed different thermal stabilities according to types of the functional group in the thermogravimetric analysis results, all exhibited a certain degree of high thermal stability, and it was confirmed that they were decomposed by heat at a temperature of 300°C to 500°C.

Comparative **9: Structural Analysis of Zr-IPA-H**

As confirmed in Example 8, different XRD analysis results were observed in Zr-IPA-R including unsubstituted or substituted isophthalic acid as an organic ligand according to types of the substituted functional group. Thus, analysis of crystal structures was performed using the XRD data of Zr-IPA (FIG. 9) among the XRD patterns of various samples measured in Example 8. As a result, it was confirmed that the metal-organic framework has a crystal structure in which the $Zr_6$ and $Zr_{12}$ cluster secondary building units co-exist. The Zr-IPA crystal was calculated as a hexagonal $P6_3$/mmc (number 194) space group having unit lattice constants of a = b = 33.752(5) Å and c = 21.416(5) Å. As shown in FIG. 8, typical 8-connected $Zr_6(\mu_3\text{-O})_4(\mu_3\text{-OH})_4$ cluster secondary building units each including 8 linker carboxylate groups and 4 terminal formate groups and 12-connected $Zr_{12}(\mu_3\text{-O})_8(\mu_3\text{-OH})_8(\mu_2\text{-OH})_6$ cluster secondary building units each including 12 linker carboxylate groups and 6 terminal formate groups are bonded, in a ratio of 3:1, to carboxylate groups of the isophthalic acid linker, thereby forming a 2D crystal structure having hexagonal and triangular channels separately running along the a-axis and the b-axis. While 1D hexagonal channels have larger pores formed by interconnection between the $Zr_6$ and $Zr_{12}$ cluster secondary building units and have a nano-scale free diameter of 20 Å to 25 Å, smaller triangular channels have a diameter of 4.2 Å to 4.6 Å. The 2D layered structures formed as described above are stacked by mutual attraction along the c-axis to form a 3D crystal structure.

**Example 10: Catalyst Reaction Test**

Generally, 0.1 g of naphthalene, 2.6 mmol of HMF, 128 mmol of 2-propanol, and 0.1 g of Zr-mdip (MOF of Example 1 or 4), as internal standard materials, were filled into a 50 mL stainless steel reactor including an inner lining of Pyrex glass and equipped with a magnetic stirrer. The reaction was conducted at a temperature of 80°C to 150°C as listed in the table below. Specifically, a reaction solution mixed with a catalyst was heated to a certain temperature and maintained at the temperature for 1 hour to proceed with a catalytic reaction, and then the catalyst was separated from the reaction solution and sufficiently washed with an ethanol-water system (95:5). A filtrate was subjected to quantitative analysis using gas chromatography (FID detector and HP-5 column), and a product was identified by GC-MS (Agilent 6890N GC and 5973 N MSD). The remaining reaction solution was re-heated to a temperature of 100°C to 150°C to continue the catalytic reaction.

For an open-system solvent reflux method, reaction was performed in a 50 mL round-bottom flask equipped with two-neck septum ports and a reflux condenser. FIG. 12 shows a schematic diagram illustrating the mechanism of catalytic transfer hydrogenation performed in this example. Transfer hydrogenation of hydroxymethylfurfural (HMF), which is biomass, was performed using the synthesized Zr-mdip-A (MIP-201) and Ti-substituted Zr/Ti-mdip-A substance, and the results are shown in Table 2 below. As shown in Table 2, it was confirmed that selective hydrogenation proceeded since hydrogen is effectively transferred to a ketone of HMF as iso alcohol was oxidized at an active site of the Zr- and Ti-based catalyst.

Table 2

| Catalyst | Reaction time | Reaction temperature (°C) | HMF conversion (%) | DHMF selectivity (%) |
|---|---|---|---|---|
| Zr-mdip-A | 1 hour | 82 @ reflux | 10.1 | 32.5 |
| Zr-mdip-A | 1 hour | 100 | 27.9 | 63.1 |
| Zr-mdip-A | 1 hour | 150 | 78.8 | 32.2 |
| Ti-mdip-A | 1 hour | 100 | 4.8 | 84.4 |

**Example 11: Volatile Organic Compound-adsorbing Characteristics of Zr-mdip-B (MIP-200)**

In order to identify the ability of Zr-mdip-B to adsorb vapor-phase organic compounds, adsorption isotherms of vapor-phase methanol, ethanol, isopropanol, and benzene, as an aromatic hydrocarbon, on Zr-mdip-B were measured. Adsorption isotherms of vapor-phase organic compounds were measured using an intelligent gravimetric analyzer (IGA, Hiden Analytical Ltd.) at 25°C in an actual vapor pressure of 0 to 0.3 relative to saturated vapor pressure ($P_0$) of each compound in the same manner as in water adsorption isotherms. Before measuring adsorption isotherms of vapor-phase organic compounds, about 29 mg of Zr-mdip-B powder was loaded in an adsorption device, and impurities present on the surface were removed by drying and dehydrating at 100°C in a vacuum for 3 hours. Subsequently, adsorption of vapor-phase alcohol was increased in two steps, and adsorption of vapor-phase benzene was increased in one step in the adsorption isotherm measurement, and adsorbed amounts were saturated at $P/P_0 = 0.3$ in all cases. Saturated adsorbed amounts of alcohol and benzene by the Zr-mdip-B samples after drying were calculated from the adsorption isotherms measured as described above: 11.8 mmol/g of methanol, 8.03 mmol/g of ethanol, 5.8 mmol/g of isopropanol, and 4.37 mmol/g of benzene. Since Zr-mdip-B, which is a zirconium-based metal-organic framework of the present invention, has both hydrophilicity and lipophilicity in the framework, not only polar alcohol molecules but also non-polar benzene molecules may be effectively adsorbed thereto. Therefore, Zr-mdip-B may be used as an adsorbent for storing these materials or separating them from a mixture.

**Example 12: Evaluation of Gas Adsorption/Separation Performance of Zr-mdip-B (MIP-200)**

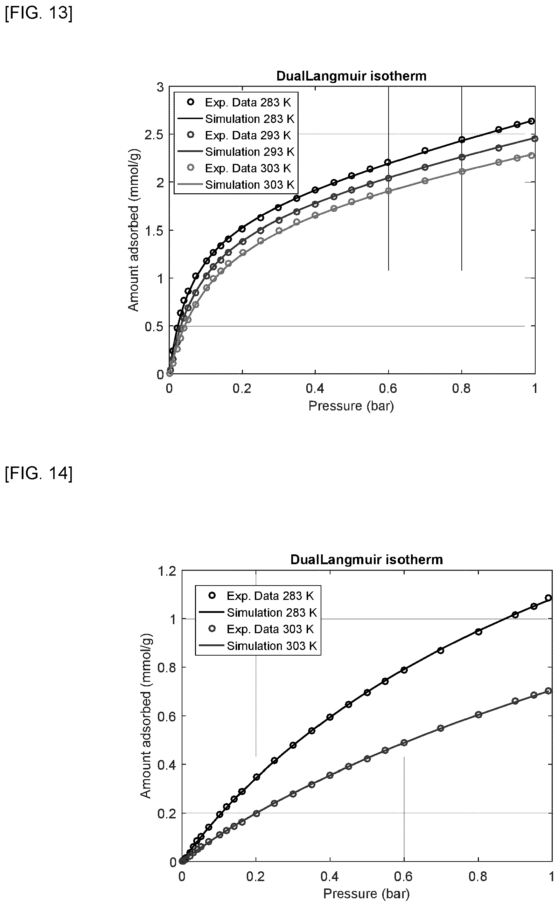

In order to evaluate gas adsorption/separation performance of Zr-mdip-B, xenon/krypton (Xe/Kr) adsorption isotherms were measured. Samples were pre-treated at 150°C for 6 hours in a vacuum of $1.33 \times 10^{-3}$ Pa ($10^{-5}$ Torr) or less before gas adsorption. Adsorbed amounts of xenon and krypton were measured at an adsorption temperature of 283 K to 303 K using a Triflex device (Micrometrics), and the results are shown in FIGS. 13 and 14. Furthermore, constants were calculated by optimizing adsorption curves at each temperature and using the dual-site Langmuir model equation below, and are shown in Table 3 below. In addition, adsorption selectivity was calculated using ideal adsorbed solution theory (IAST) to measure adsorption selectivity to two-component adsorption.

## [Dual-site Langmuir Model Equation]

$$q_i = q_{m1,i} \frac{K_{1,i} P}{1 + K_{1,i} P}$$

In the equation,

$$K = K_{n,i}^0 \exp\left(-\frac{\Delta H_n}{R_g T}\right),$$

q is adsorbed amount in equilibrium (mol/kg), $q_{m1}$ and $q_{m2}$ are saturation capacities of site 1 and site 2, respectively (mol/kg), $K_1$ and $K_2$ are affinity coefficients of site 1 and site 2, respectively (/bar), P is equilibrium pressure (bar), and $\Delta H$ is isosteric heat of adsorption (kJ/mol).

Table 3

| Type of gas | $q_m$ (mol/kg) | | $K_i^0$ (/bar) | | $-\Delta H$ (kJ/mol) | |
|---|---|---|---|---|---|---|
| | $q_{m1}$ | $q_{m2}$ | $K_{1,i}^0$ | $K_{2,i}^0$ | $(-\Delta H)_1$ | $(-\Delta H)_2$ |
| Xe | 1.70 | 12.4 | $1.62 \times 10^{-3}$ | $5.86 \times 10^{-4}$ | 21.7 | 11.9 |
| Kr | 0.10 | 2.43 | 0.22 | $1.79 \times 10^{-5}$ | 6.84 | 24.9 |

As shown in FIGS. 13 and 14, adsorbed amounts of Xe gas were from 2.3 mmol/g to 2.6 mmol/g at a pressure of 1 bar, and adsorbed amounts of Kr gas were from 0.7 mmol/g to 1.1 mmol/g. This indicates that Zr-mdip-B has higher adsorption selectivity to Xe gas. In addition, as shown in Table 3, the calculated heat of adsorption of Xe was higher than that of Kr, indicating that Xe is more strongly adsorbed to the adsorption site of Zr-mdip-B.

Furthermore, as a result of identifying selectivity of the two-component gas mixture calculated using the IAST, a very high Xe/Kr adsorption selectivity of 14 was obtained at 30°C.

**Claims**

1. A metal-organic framework (MOF) having a three-dimensional (3D) structure comprising $Zr_6$ cluster secondary building units (SBUs) and 5,5'-methylenediisophthalic acid ($H_4$mdip) as multitopic linkers forming coordinate bonds with the $Zr_6$ cluster secondary building units, the MOF represented by Formula 1 below:

$$[Zr_6(\mu_3\text{-}O)_{4+x}(\mu_3\text{-}OH)_{4-2x}(mdip)_a(X1)_b(OH)_c]$$

wherein in Formula 1,

$0 \leq x \leq 2$, $1.3 \leq a \leq 2.2$, $0 \leq b \leq 6$, $0 \leq c \leq 6$, and
X1 comprises at least one anion selected from the group consisting of formate, acetate, nitrate, fluoride, chloride, bromide, sulfate, phosphate, alkoxide, and hydroxide.
wherein the MOF constitutes a soc-type (cdj topology) 3D framework including warped cubic pockets and free void spaces as a crystal structure including a cubic space group formed by bonds between COO- functional groups of the multitopic linkers and the $Zr_6$ cluster secondary building units.

2. The MOF of claim 1, wherein the MOF constitutes a soc-type (cdj topology) 3D framework including warped cubic pockets and free void spaces as a crystal structure including a cubic space group formed by bonds between COO- functional groups of the multitopic linkers and the $Zr_6$ cluster secondary building units.

3. The MOF of claim 2, wherein in an X-ray diffraction (XRD) pattern analyzed using a Cu K-$\alpha$ beam line ($\lambda$ = 0.15418 nm), main peaks are observed at a $2\theta$ of $7.14° \pm 0.2°$, $10.1° \pm 0.2°$, $12.4° \pm 0.2°$, and $14.38° \pm 0.2°$.

4. A metal-organic framework (MOF) having a three-dimensional (3D) structure comprising $Zr_6$ cluster secondary building units (SBUs) and 5,5'-methylenediisophthalic acid ($H_4$mdip) as multitopic linkers forming coordinate bonds with the $Zr_6$ cluster secondary building units, the MOF represented by Formula 1 below:

$$[Zr_6(\mu_3\text{-}O)_{4+x}(\mu_3\text{-}OH)_{4-2x}(mdip)_a(X1)_b(OH)_c]$$

wherein in Formula 1,

$0 \leq x \leq 2$, $1.3 \leq a \leq 2.2$, $0 \leq b \leq 6$, $0 \leq c \leq 6$, and
X1 comprises at least one anion selected from the group consisting of formate, acetate, nitrate, fluoride, chloride, bromide, sulfate, phosphate, alkoxide, and hydroxide.
wherein the MOF constitutes a framework having two types of channels, hexagonal and triangular channels, separately running along the c-axis as a crystal structure having a hexagonal space group formed by bonds between COO- functional groups of the multitopic linkers and the $Zr_6$ cluster secondary building units.

5. The MOF of claim 4, wherein in an X-ray diffraction (XRD) pattern analyzed using a Cu K-$\alpha$ beam line ($\lambda$ = 0.15418 nm), main peaks are observed at a $2\theta$ of $3.98° \pm 0.2°$, $7.70° \pm 0.2°$, and $10.34° \pm 0.2°$.

6. A method of manufacturing the metal-organic framework according to any one of claims 1 to 5, the method comprising:

preparing a solution by dissolving unsubstituted or substituted isophthalic acid or 5,5'-methylenediisophthalic acid, as a multitopic linker, in a first solvent selected from the group consisting of water, monocarboxylic acid hydrate, monocarboxylic acid anhydride, and any mixture thereof, and adding a Zr precursor selected from the group consisting of a zirconium inorganic salt, a zirconium organic salt, zirconium metal, and a zirconium oxide to the solution to satisfy a molar ratio of zirconium to the multitopic linker of 1 to 4, followed by reaction thereof, wherein the solution further comprises a second solvent selected from the group consisting of alcohols, ketones, esters, and cyclic esters not containing nitrogen or sulfur, and

the reaction is performed at a temperature of 25°C to 250°C by a reflux synthesis method or a solvothermal synthesis method.

7. A composition for a catalyst or adsorption comprising the metal-organic framework according to any one of claims 1 to 5.

8. A composition for adsorbing water comprising the metal-organic framework of any one of claims 1 to 5 as a low-temperature regeneration water adsorbent.

9. A composition for adsorbing and separating a gas comprising the metal-organic framework according to any one of claims 1 to 5 as a gas adsorbent.

**Patentansprüche**

1. Metallorganisches Gerüst (MOF) mit einer dreidimensionalen (3D) Struktur, mitsekundären $Zr_6$-Cluster-Baueinheiten (SBUs) und 5,5'-Methylendiisophthalsäure ($H_4$mdip) als multitopische Linker, die koordinative Bindungen mit den sekundären $Zr_6$-Cluster-Baueinheiten bilden, wobei das MOF durch die folgende Formel 1 dargestellt wird:

$$[Zr_6(\mu_3\text{-}O)_{4+x}(\mu_3\text{-}OH)_{4-2x}(mdip)_a(X1)_b(OH)_c]$$

wobei in Formel 1,

$0 \leq x \leq 2$, $1,3 \leq a \leq 2,2$, $0 \leq b \leq 6$, $0 \leq c \leq 6$, und
X1 mindestens ein Anion aufweist, das ausgewählt ist aus der Gruppe bestehend aus Formiat, Acetat, Nitrat, Fluorid, Chlorid, Bromid, Sulfat, Phosphat, Alkoxid und Hydroxid,
wobei das MOF ein 3D-Gerüst vom soc-Typ (cdj-Topologie) bildet, das verzogene kubische Taschen und freie Leerräume als eine Kristallstruktur enthält, die eine kubische Raumgruppe aufweist, die durch Bindungen zwischen funktionellen COO-Gruppen der multitopischen Linker und den sekundären Zr6-Cluster-Baueinheiten gebildet wird.

2. MOF nach Anspruch 1, wobei das MOF ein 3D-Gerüst vom soc-Typ (cdj-Topologie) bildet, das verzerrte kubische Taschen und freie Leerräume als eine Kristallstruktur enthält, die eine kubische Raumgruppe aufweist, die durch Bindungen zwischen funktionellen COO-Gruppen der multitopischen Linker und den sekundären $Zr_6$-Cluster-Baueinheiten gebildet wird.

3. MOF nach Anspruch 2, wobei in einem Röntgenbeugungs(XRD)muster, das unter Verwendung einer Cu-K-$\alpha$-Strahlungslinie ($\lambda$ = 0,15418 nm) analysiert wird, Hauptpeaks bei einem Winkel $2\Theta$ von $7,14° \pm 0,2°$, $10,1° \pm 0,2°$, $12,4° \pm 0,2°$ und $14,38° \pm 0,2°$ beobachtet werden.

4. Metallorganisches Gerüst (MOF) mit einer dreidimensionalen (3D) Struktur, mit sekundären $Zr_6$-Cluster-Baueinheiten (SBUs) und 5,5'-Methylendiisophthalsäure ($H_4$mdip) als multitopische Linker, die koordinative Bindungen mit den sekundären $Zr_6$-Cluster-Baueinheiten bilden, wobei das MOF durch die folgende Formel 1 dargestellt ist:

$$[Zr_6(\mu_3\text{-}O)_{4+x}(\mu_3\text{-}OH)_{4-2x}(mdip)_a(X1)_b(OH)_c]$$

wobei in Formel 1,

$0 \leq x \leq 2$, $1,3 \leq a \leq 2,2$, $0 \leq b \leq 6$, $0 \leq c \leq 6$, und

X1 mindestens ein Anion aufweist, das ausgewählt ist aus der Gruppe bestehend aus Formiat, Acetat, Nitrat, Fluorid, Chlorid, Bromid, Sulfat, Phosphat, Alkoxid und Hydroxid,

wobei das MOF ein Gerüst mit zwei Arten von Kanälen, hexagonalen und dreieckigen Kanälen, bildet, die getrennt entlang der c-Achse als eine Kristallstruktur mit einer hexagonalen Raumgruppe verlaufen, die durch Bindungen zwischen funktionellen COO-Gruppen der multitopischen Linker und den sekundären Zre-Cluster-Baueinheiten gebildet wird.

5. MOF nach Anspruch 4, wobei in einem Röntgenbeugungs(XRD)muster, das unter Verwendung einer Cu-K-$\alpha$-Strahlungslinie ($\lambda$ = 0,15418 nm) analysiert wird, Hauptpeaks bei einem Winkel $2\theta$ von 3,98° $\pm$ 0,2°, 7,70° $\pm$ 0,2° und 10,34° $\pm$ 0,2° beobachtet werden.

6. Verfahren zum Herstellen des metallorganischen Gerüsts nach einem der Ansprüche 1 bis 5, wobei das Verfahren die Schritte aufweist:

Herstellen einer Lösung durch Lösen von unsubstituierter oder substituierter Isophthalsäure oder 5,5'-Methylendiisophthalsäure als ein multitopischer Linker in einem ersten Lösungsmittel, das ausgewählt ist aus der Gruppe bestehend aus Wasser, Monocarbonsäurehydrat, Monocarbonsäureanhydrid und einem beliebigen Gemisch davon, und Zugeben eines Zr-Vorläufers, der ausgewählt ist aus der Gruppe bestehend aus einem anorganischen Zirconiumsalz, einem organischen Zirconiumsalz, Zirconiummetall und einem Zirkoniumoxid, zur Lösung, um ein molares Verhältnis von Zirkonium zu dem multitopischen Linker von 1 bis 4 zu erhalten, gefolgt von einer Reaktion davon,

wobei die Lösung weiterhin ein zweites Lösungsmittel aufweist, das ausgewählt ist aus der Gruppe bestehend aus Alkoholen, Ketonen, Estern und cyclischen Estern, die weder Stickstoff noch Schwefel enthalten, und

wobei die Reaktion bei einer Temperatur von 25°C bis 250°C durch ein Rückflusssyntheseverfahren oder ein Solvothermalsyntheseverfahren ausgeführt wird.

7. Zusammensetzung für einen Katalysator oder ein Adsorptionsmittel, mit dem metallorganischen Gerüst nach einem der Ansprüche 1 bis 5.

8. Zusammensetzung zum Adsorbieren von Wasser, mit dem metallorganischen Gerüst nach einem der Ansprüche 1 bis 5 als Niedertemperatur-Regenerationswasseradsorptionsmittel.

9. Zusammensetzung zum Adsorbieren und Trennen eines Gases, mit dem metallorganischen Gerüst nach einem der Ansprüche 1 bis 5 als ein Gasadsorptionsmittel.

## Revendications

1. Réseau métallo-organique (MOF) ayant une structure tridimensionnelle (3D) comprenant des unités de construction secondaires d'agrégat $Zr_6$ et de l'acide 5,5'-méthylènediisophthalique ($H_4$mdip) en tant que lieurs multitopiques formant des liaisons de coordination avec les unités de construction secondaire d'agrégat Zre, le MOF étant représenté par la Formule 1 ci-dessous :

$$[Zr_6(\mu_3\text{-}O)_{4+x}(\mu_3\text{-}OH)_{4-2x}(mdip)_a(X1)_b(OH)_c]$$

dans lequel, dans la Formule 1,

$0 \leq x \leq 2$, $1,3 \leq a \leq 2,2$, $0 \leq b \leq 6$, $0 \leq c \leq 6$, et

$X_1$ comprend au moins un anion sélectionné parmi le groupe constitué de formate, acétate, nitrate, fluorure, chlorure, bromure, sulfate, phosphate, alcoxyde et hydroxyde,

dans lequel le MOF constitue un réseau 3D de type soc (topologie cdj) incluant des poches cubiques déformées et des espaces vides libres sous forme de structure cristalline incluant un groupe d'espace cubique formé par des liaisons entre groupements fonctionnels COO⁻ des lieurs multitopiques et unités de construction secondaires d'agrégat $Zr_6$.

2. MOF selon la revendication 1, dans lequel le MOF constitue un réseau 3D de type soc (topologie cdj) incluant des poches cubiques déformées et des espaces vides libres sous forme de structure cristalline incluant un groupe d'espace cubique formé par des liaisons entre groupements fonctionnels COO⁻ des lieurs multitopiques et unités de construction secondaires d'agrégat $Zr_6$.

3. MOF selon la revendication 2, dans lequel dans un spectre de diffraction des Rayons X (XRD) analysé en utilisant une ligne de faisceau K-$\alpha$ du Cu ($\lambda = 0,15418$ nm), des pics principaux étant observés à un $2\Theta$ de $7,14° \pm 0,2°$, $10,1° \pm 0,2°$, $12,4° \pm 0,2°$, et $14,38° \pm 0,2°$.

4. Réseau métallo-organique (MOF) ayant une structure tridimensionnelle (3D) comprenant des unités de construction secondaires d'agrégat $Zr_6$ et de l'acide 5,5'-méthylènediisophthalique ($H_4$mdip) en tant que lieurs multitopiques formant des liaisons de coordination avec les unités de construction secondaire d'agrégat Zre, le MOF étant représenté par la Formule 1 ci-dessous :

$$[Zr_6(\mu_3\text{-}O)_{4+x}(\mu_3\text{-}OH)_{4-2x}(mdip)_a(X1)_b(OH)_c]$$

dans lequel, dans la Formule 1,

$0 \leq x \leq 2$, $1,3 \leq a \leq 2,2$, $0 \leq b \leq 6$, $0 \leq c \leq 6$, et
$X_1$ comprend au moins un anion sélectionné parmi le groupe constitué de formate, acétate, nitrate, fluorure, chlorure, bromure, sulfate, phosphate, alcoxyde et hydroxyde,
dans lequel le MOF constitue un réseau ayant deux types de canaux, des canaux hexagonaux et triangulaires, s'étendant séparément le long de l'axe c, sous forme de structure cristalline ayant un groupe d'espace hexagonal formé par des liaisons entre groupements fonctionnels COO⁻ des lieurs multitopiques et unités de construction secondaires d'agrégat $Zr_6$.

5. MOF selon la revendication 4, dans lequel dans un spectre de diffraction des Rayons X (XRD) analysé en utilisant une ligne de faisceau K-$\alpha$ du Cu ($\lambda = 0,15418$ nm), des pics principaux étant observés à un $2\Theta$ de $3,98° \pm 0,2°$, $7,70° \pm 0,2°$, et $10,34° \pm 0,2°$.

6. Procédé de production du réseau métallo-organiques selon l'une quelconque des revendications 1 à 5, le procédé comprenant :

la préparation d'une solution en dissolvant un acide isophthalique substitué ou non substitué ou de l'acide 5,5'-méthylènediisophthalique, en tant que lieur multitopique, dans un premier solvant sélectionné dans le groupe constitué d'eau, hydrate d'acide monocarboxylique, anhydride d'acide monocarboxylique, et un quelconque mélange de ceux-ci, et l'addition d'un précurseur de Zr sélectionné dans le groupe constitué d'un sel inorganique de zirconium, un sel organique de zirconium, et un oxyde de zirconium à la solution en respectant un ratio molaire de zirconium au lieur multitopique de 1 à 4, suivie par la réaction entre ceux-ci,
dans lequel la solution comprend en outre un deuxième solvant sélectionné dans le groupe constitué d'alcools, cétones, esters, et esters cycliques ne contenant pas d'azote ou de soufre, et
la réaction étant effectuée à une température de 25°C à 250°C par une méthode de synthèse par reflux ou une méthode de synthèse solvothermique.

7. Composition pour un catalyseur ou adsorption comprenant le réseau métallo-organique selon l'une quelconque des revendications 1 à 5.

8. Composition pour l'adsorption d'eau comprenant le réseau métallo-organique selon l'une quelconque des revendications 1 à 5 en tant qu'adsorbant d'eau de régénération à basse température.

9. Composition pour l'adsorption d'eau et la séparation d'un gaz comprenant le réseau métallo-organique selon l'une quelconque des revendications 1 à 5 en tant qu'adsorbant de gaz.

[FIG. 1]

[FIG. 2]

[FIG. 3]

[FIG. 4]

[FIG. 5]

[FIG. 6]

[FIG. 7]

[FIG. 8]

**a) Zr$_6$ Cluster**　　　　**b) Zr$_{12}$ Cluster**

**c) Zr-IPA-R**

[FIG. 9]

[FIG. 10]

[FIG. 11]

[FIG. 12]

[FIG. 13]

[FIG. 14]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG HAO et al.** *Nature Communications,* 2018, vol. 9 (1
- **WANG SUJING et al.** *Nature Energy,* 2018, vol. 3 (11
- *Chem. Soc. Rev.,* 2016, vol. 45, 2327-2367
- *Chem. Mater.,* 2016, vol. 28, 3749-3761
- *J. Catal.,* 2017, vol. 352, 401-414
- *J. Am. Chem. Soc.,* 2013, vol. 135, 11465-11468
- *Green Chem.,* 2016, vol. 18, 4542-4552
- *J. Am. Chem. Soc.,* 2014, vol. 136, 12844-12847
- *Angew. Che. Int. Ed.,* 2015, vol. 51, 14696-14700
- *Inorg. Chem.,* 2015, vol. 54, 8396-8400
- *Angew. Chem. Int. Ed.,* 2015, vol. 54, 6795-6799
- *J. Am. Chem. Soc.,* 2011, vol. 133, 4178-4181
- *Angew. Chem. Int. Ed.,* 2016, vol. 55, 13224-13228
- *PNAS,* 2008, vol. 105, 11623-11627
- *Chem. Eng. Sci.,* 2015, vol. 124, 118-124
- *J. Am. Chem. Soc.,* 2014, vol. 136, 4369-4381
- *Science,* 2017, vol. 358, 3139